# FASCICULE DE BREVET EUROPEEN

(11) **EP 3 543 588 B1**
(45) Date de publication et mention de la délivrance du brevet: **05.08.2020**
(21) Numéro de dépôt: 19164471.5
(22) Date de dépôt: 21.03.2019
(51) Int. Cl.: F16M 11/12, F16H 21/40, H02N 2/00, H02N 2/04, H01Q 1/28, H01Q 1/12, H01Q 3/08, F16M 11/18

(54) **DISPOSITIF DE POSITIONNEMENT ANGULAIRE**
VORRICHTUNG ZUR WINKELEINSTELLUNG
APPARATUS FOR ANGULAR POSITIONING

(30) Priorité: 22.03.2018 FR 1800240
(43) Date de publication de la demande: 25.09.2019
(73) Titulaire: Thales, 92400 Courbevoie (FR)
(72) Inventeur: CALMETTES-CARENSAC, Fabien, 31037 TOULOUSE Cedex (FR)
(74) Mandataire: Honnet, Sylvie Florence Liliane

(56) Documents cités:
- EP-A1- 2 816 723
- US-A1- 2011 043 433
- US-A1- 2014 174 214

## Description

L'invention concerne un dispositif de positionnement destiné à positionner un instrument tel qu'une antenne, un réflecteur, ou toute charge utile. L'invention peut s'appliquer au domaine spatial mais elle trouve application dans différents autres domaines tels que la navigation ou le positionnement d'un instrument quelconque par rapport à un autre. Nous prendrons comme exemple une application spatiale de l'invention.

Dans les applications spatiales, il est nécessaire de pouvoir orienter certains éléments d'un satellite ou d'un véhicule spatial, tels qu'une antenne ou un réflecteur, dans une direction prédéterminée afin, par exemple, de les diriger vers une étoile fixe, de conserver un pointage vers un point à la surface de la terre, ou bien encore de balayer une zone particulière à la surface de la terre ou d'un astre quelconque. Le positionnement d'un instrument doit se faire idéalement sur toute la terre en minimisant la masse, le nombre d'actionneurs et ses torons filaires associés.

De nos jours, il existe des dispositifs de positionnement composés de deux moteurs positionnés à 90°, le second moteur étant monté sur le premier moteur. Ce type de dispositif est certes précis et robuste, mais il nécessite deux actionneurs rotatifs qui représentent une masse et un coût élevés. De plus, cette solution implique qu'il faut gérer les torons filaires de deux moteurs. Cela est problématique dans le cas d'utilisation d'une palette à plusieurs réflecteurs du fait qu'un couple résistant est généré par les torons filaires lors du déploiement de la palette. Par ailleurs, cette solution nécessite également deux cartes de commande moteur contribuant à la masse et aux coûts supplémentaires. Enfin, comme les câbles d'alimentation des deux moteurs doivent passer par les axes de rotation, à l'emplanture, le toron de câbles impacte la marge de motorisation.

Un autre dispositif de positionnement de l'art antérieur comprend deux moteurs positionnés à 90° sur lesquels sont montés des biellettes en liaison avec le réflecteur. Cette solution présente les mêmes inconvénients que la solution précédente. En effet, la nécessité de deux moteurs implique une masse et un coût élevés du fait de la présence de deux moteurs et de deux cartes de commande moteur. Et les torons filaires de deux moteurs sont difficiles à gérer. Le document US2014/0174214 A1 divulgue un tel dispositif de positionnement.

Un autre dispositif de positionnement de l'art antérieur utilise des actionneurs linéaires qui tirent et/ou poussent le réflecteur. Ce type de mécanisme est connu sous le nom anglo-saxon « push/pull » (signifiant « pousser/tirer »). En plus des inconvénients précédemment cités de masse et coût élevés avec deux actionneurs et deux cartes de commande, de problème de gestion des torons filaires, cette solution n'offre qu'une faible excursion de +/- 1,5°.

L'invention vise à pallier tout ou partie des problèmes cités plus haut en proposant un dispositif de positionnement comprenant un seul moteur pour orienter un instrument suivant deux axes. L'invention présente l'avantage de diminuer le nombre de mécanismes utilisés et de diminuer le nombre de cartes de commande moteur (gain en compétitivité et en masse), de diminuer la taille du harnais électrique, diminuant ainsi les contraintes sur les structures déployables portant des antennes mobiles, et sur les mécanismes de déploiement. Cette solution représente un gain de coût et de masse d'environ 20% par rapport aux solutions de l'art antérieur.

A cet effet, l'invention a pour objet un dispositif de positionnement comprenant un châssis, un plateau à positionner, un moteur comprenant un stator relié au châssis et un rotor, un arbre relié au rotor entraîné par le moteur, mobile en rotation par rapport au châssis dans un premier sens et dans un second sens, inverse du premier sens, un premier élément de transmission de mouvement rotatif configuré pour être entraîné en rotation par l'arbre dans le premier sens et libre dans le second sens, un deuxième élément de transmission de mouvement rotatif configuré pour être entraîné en rotation par l'arbre dans le second sens et libre dans le premier sens, une première bielle reliée au plateau par une première liaison pivot et reliée au premier élément de transmission de mouvement rotatif par une deuxième liaison pivot décalée de l'axe de rotation du premier élément de transmission de mouvement rotatif, une deuxième bielle reliée au plateau par une troisième liaison pivot et reliée au deuxième élément de transmission de mouvement rotatif par une quatrième liaison pivot décalée de l'axe de rotation du deuxième élément de transmission de mouvement rotatif, un élément de liaison à au moins deux degrés de liberté en rotation entre le plateau et le châssis.

Avantageusement, le premier élément de transmission de mouvement rotatif comprend une première roue libre, et le deuxième élément de transmission de mouvement rotatif comprend une deuxième roue libre.

Selon un autre mode de réalisation, le dispositif de positionnement comprend un troisième élément de transmission de mouvement rotatif relié au premier élément de transmission de mouvement rotatif de sorte que la rotation du premier élément de transmission de mouvement rotatif dans le premier sens entraîne le troisième élément de transmission de mouvement rotatif en rotation, un quatrième élément de transmission de mouvement rotatif relié au deuxième élément de transmission de mouvement rotatif de sorte que la rotation du deuxième élément de transmission de mouvement rotatif dans le second sens entraîne le quatrième élément de transmission de mouvement rotatif en rotation, et la première bielle relie le plateau au premier élément de transmission de mouvement rotatif par l'intermédiaire du troisième élément de transmission de mouvement rotatif, et la deuxième bielle relie le plateau au deuxième élément de transmission de mouvement rotatif par l'intermédiaire du quatrième élément de transmission de mouvement rotatif.

Avantageusement, le troisième élément de transmission de mouvement rotatif a un premier rapport de réduction avec le premier élément de transmission de mouvement rotatif et le quatrième élément de transmission de mouvement rotatif a un deuxième rapport de réduction avec le deuxième élément de transmission de mouvement rotatif.

Avantageusement, le premier rapport de réduction et le deuxième rapport de réduction sont identiques.

Avantageusement, l'élément de liaison est une rotule à doigt.

Avantageusement, un premier axe passant par le centre du troisième élément de transmission de mouvement rotatif et le centre de l'élément de liaison et un deuxième axe passant par le centre du quatrième élément de transmission de mouvement rotatif et le centre de l'élément de liaison s'intersectent sensiblement perpendiculairement.

Selon un autre mode de réalisation, le premier et le troisième éléments de transmission de mouvement rotatif sont des pignons, le troisième élément de transmission de mouvement rotatif engrènant avec le premier élément de transmission de mouvement rotatif de sorte à ce que la rotation du premier élément de transmission de mouvement rotatif dans le premier sens entraîne le troisième élément de transmission de mouvement rotatif en rotation.

Selon un autre mode de réalisation, le deuxième et le quatrième éléments de transmission de mouvement rotatif sont des pignons, le quatrième élément de transmission de mouvement rotatif engrènant avec le deuxième élément de transmission de mouvement rotatif de sorte que la rotation du deuxième élément de transmission de mouvement rotatif dans le second sens entraîne le quatrième élément de transmission de mouvement rotatif en rotation.

Selon un autre mode de réalisation, le premier et le troisième éléments de transmission de mouvement rotatif sont des poulies, le troisième élément de transmission de mouvement rotatif étant relié au premier élément de transmission de mouvement rotatif par une première courroie, de sorte que la rotation du premier élément de transmission de mouvement rotatif dans le premier sens entraîne le troisième élément de transmission de mouvement rotatif en rotation dans le premier sens.

Selon un autre mode de réalisation, le deuxième et le quatrième éléments de transmission de mouvement rotatif sont des poulies, le quatrième élément de transmission de mouvement rotatif étant relié au deuxième élément de transmission de mouvement rotatif par une deuxième courroie, de sorte que la rotation du deuxième élément de transmission de mouvement rotatif dans le second sens entraîne le quatrième élément de transmission de mouvement rotatif en rotation dans le second sens.

Avantageusement, le plateau s'étend sensiblement selon un plan et un troisième axe sensiblement perpendiculaire aux premier et deuxième axes passant par l'élément de liaison intersecte le plateau sensiblement en son centre.

L'invention concerne aussi tout équipement spatial comprenant un dispositif de positionnement tel que décrit dans cette demande.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un premier mode de réalisation d'un dispositif de positionnement selon l'invention,
- la figure 2 représente un autre mode de réalisation d'un dispositif de positionnement selon l'invention,
- la figure 3 représente un autre mode de réalisation d'un dispositif de positionnement selon l'invention,
- la figure 4 représente un autre mode de réalisation d'un dispositif de positionnement selon l'invention,
- la figure 5 représente un autre mode de réalisation d'un dispositif de positionnement selon l'invention,
- la figure 6 représente un autre mode de réalisation d'un dispositif de positionnement selon l'invention,
- la figure 7 représente un équipement spatial comprenant un dispositif de positionnement selon l'invention.

Par souci de clarté, les mêmes éléments porteront les mêmes repères dans les différentes figures.

Dans la description de la présente demande, l'invention est décrite dans le cadre d'une application spatiale. Comme cité précédemment, l'invention peut s'appliquer à tout autre domaine technique nécessitant la mise en œuvre d'un dispositif de positionnement d'un instrument quelconque. L'invention s'applique également pour la réalisation d'un mouvement relatif d'un objet par rapport à un autre, par exemple l'ouverture et la fermeture d'un capot.

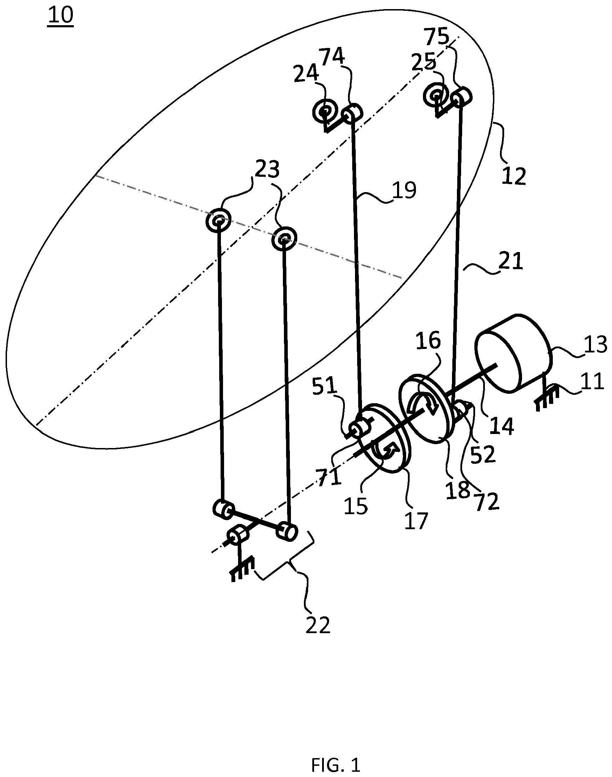

La figure 1 représente un premier mode de réalisation d'un dispositif de pointage 10 de l'ensemble de pointage selon l'invention. Le dispositif de pointage 10 est destiné à positionner, orienter un instrument dans une direction prédéterminée. Dans le cadre d'une application spatiale, l'instrument est positionné sur un plateau 12 et peut être par exemple une antenne que l'on souhaite pointer vers un point déterminé à la surface de la Terre, ou un réflecteur. L'invention s'applique aussi à l'ouverture, fermeture d'une pièce telle qu'un capot, auquel cas le plateau 12 que l'on peut orienter représente le capot. Dans la description, la référence 12 se réfère au plateau qui porte un instrument dans l'exemple donné mais il peut également s'agir directement de l'instrument, l'antenne ou du réflecteur.

Le dispositif de positionnement 10 comprend un châssis 11 et le plateau 12 à positionner. Selon l'invention, il comprend en outre un moteur 13 comprenant un stator relié au châssis et un rotor, un arbre 14 relié au rotor entraîné par le moteur 13, mobile en rotation par rapport au châssis 11 dans un premier sens 15 et dans un second sens 16, inverse du premier sens 15, un premier élément de transmission de mouvement rotatif 17 et configuré pour être entraîné en rotation par l'arbre 14 dans le premier sens 15 et libre dans le second sens 16, un deuxième élément de transmission de mouvement rotatif 18 et configuré pour être entraîné en rotation par l'arbre 14 dans le second sens 16 et libre dans le premier sens 15, une première bielle 19 reliée au plateau 12 par une première liaison pivot 74 et reliée au premier élément de transmission de mouvement rotatif 17 par une deuxième liaison pivot 71 décalée de l'axe de rotation du premier élément de transmission de mouvement rotatif 17, une deuxième bielle 21 reliée au plateau 12 par une troisième liaison pivot 75 et reliée au deuxième élément de transmission de mouvement rotatif 18 par une quatrième liaison pivot 72 décalée de l'axe de rotation du deuxième élément de transmission de mouvement rotatif 18, un élément de liaison 22 à au moins deux degrés de liberté en rotation entre le plateau 12 et le châssis 11. L'arbre 14 relié au rotor peut être solidaire du rotor ou bien relié au rotor par un élément de couplage tel qu'un embrayage.

Le premier élément de transmission de mouvement rotatif 17 comprend une première roue libre. Le deuxième élément de transmission de mouvement rotatif 18 comprend une deuxième roue libre. Ces roues libres sont montées de façon à ce que quand l'arbre 14 tourne dans le premier sens 15, le premier élément de transmission de mouvement rotatif 17 est entraîné alors que le deuxième élément de transmission de mouvement rotatif 18 ne l'est pas. Et quand l'arbre 14 tourne dans le second sens 16, il entraîne le deuxième élément de transmission de mouvement rotatif 18 mais pas le premier élément de transmission de mouvement rotatif 17. L'utilisation de roues libres dans les éléments de transmission de mouvement rotatif 17, 18 permet de sélectionner l'entraînement des éléments de transmission de mouvement rotatif 17 ou 18 avec un seul arbre moteur 14.

Pour chacun des éléments de transmission de mouvement rotatif 17, 18, entraîné dans un sens et libre dans le sens inverse, il peut être envisagé une solution de couplage et découplage par un système de roue libre, par exemple par deux roues crantées en vis-à-vis. La première roue crantée est fixée sur l'arbre de rotation de l'élément 17, 18, elle est mobile dans l'axe. La roue crantée en vis-à-vis est fixée sur la partie à un seul sens de rotation. Dans un sens de rotation, les roues crantées sautent des dents sans transmettre la rotation, dans l'autre sens elles engrènent et transmettent le mouvement de rotation. Tout autre type de roue libre industrielle peut être utilisé, par exemple à rouleau ou à came.

Dans le mode de réalisation présenté à la figure 1, le dispositif de positionnement 10 comprend un premier doigt 51 fixé au premier élément de transmission de mouvement rotatif 17 s'étendant sensiblement parallèlement à l'axe de rotation de l'élément 17. Le dispositif de positionnement comprend un deuxième doigt 52 fixé au deuxième élément de transmission de mouvement rotatif 18 s'étendant sensiblement parallèlement à l'axe de rotation de l'élément 18.

La première bielle 19 s'étend sensiblement perpendiculairement au premier doigt 51 et est en liaison pivot avec le premier doigt 51. La deuxième bielle 21 s'étend sensiblement perpendiculairement au deuxième doigt 52 et est en liaison pivot avec le deuxième doigt 52.

Le dispositif de positionnement selon l'invention repose sur l'utilisation d'un seul moteur. Il s'agit d'un actionneur rotatif pour orienter le plateau 12 suivant deux axes. Les deux sens de rotation 15, 16 du moteur 13 sont utilisés pour sélectionner l'axe d'orientation que l'on souhaite activer.

Le plateau 12 peut comprendre deux doigts. Chacune des bielles 19, 21 est reliée à un doigt 24, 25 par une liaison pivot 74, 75 à une de leurs extrémités. A l'autre extrémité, chacune des bielles 19, 21 est reliée à un doigt 51, 52 par une liaison pivot 71, 72 fixé à un élément de transmission de mouvement rotatif 17, 18. L'élément de liaison 22 est relié au plateau 12 par des éléments de fixation 23 d'une part, et en liaison à au moins deux degrés de liberté en rotation par rapport au châssis 11 d'autre part.

Lorsque l'arbre moteur 14 tourne dans le premier sens 15, le premier élément de transmission de mouvement rotatif 17 tourne dans le premier sens, et entraîne le doigt qui y est fixé dans le même sens de rotation 15. La première bielle 19, en liaison pivot avec le doigt 51 fixé sur le premier élément 17 et avec le doigt 24 fixé au plateau 12, depuis sa position représentée sur la figure 1 va suivre le mouvement du doigt 51 fixé sur le premier élément 17 et entraîner le plateau 12 au niveau du doigt 24 (c'est-à-dire le tirer). Le deuxième élément de transmission de mouvement rotatif 18 est monté sur l'arbre 14 et est libre dans le sens de rotation 15. La deuxième bielle 21 n'est pas mise en mouvement.

Inversement, lorsque l'arbre moteur 14 tourne dans le second sens de rotation 16, le premier élément de transmission de mouvement rotatif 17 est monté sur l'arbre 14 et est libre dans le sens de rotation 16. La première bielle 19 n'est pas mise en mouvement. Le deuxième élément de transmission de mouvement rotatif 18 tourne dans le second sens de rotation 16, et entraîne le doigt 52 qui y est fixé dans le même sens de rotation 16. La deuxième bielle 21, en liaison pivot avec le doigt 52 fixé sur le deuxième élément 18 et avec le doigt 25 fixé au plateau 12, depuis sa position représentée sur la figure 1 va suivre le mouvement du doigt 52 fixé sur le premier élément 18 et entraîner le plateau 12 au niveau du doigt 25 (c'est-à-dire le pousser). A noter que les termes « tirer » et « pousser » sont utilisés pour faciliter la compréhension. Le mouvement inculqué par les bielles 19, 21 au plateau au niveau des doigts 24, 25 dépend de la position des doigts 51, 52 fixés sur les éléments 17, 18 par rapport à l'arbre moteur 14. Lorsqu'un doigt (51 ou 52) fixé à un élément (17 ou 18) en se déplaçant en rotation se rapproche du plateau 12, la bielle associée pousse le plateau 12 et lorsque le doigt (51 ou 52) en se déplaçant en rotation s'éloigne du plateau 12, la bielle associée tire sur le plateau 12.

L'élément de liaison 22 étant relié au plateau 12 par des éléments de fixation 23 d'une part, et en double liaison pivot (l'une sur l'autre) par rapport au châssis d'autre part, bloque les translations du plateau 12 et laisse les rotations du plateau se faire selon les rotations de l'arbre moteur 14. L'élément de liaison 22 peut être par exemple une rotule à doigt ou un cardan.

On peut noter que le mode de réalisation présenté à la figure 1 est notamment applicable pour faire un mouvement du type ouverture d'un capot. Avec un premier élément de transmission de mouvement rotatif 17 suffisamment proche de l'extrémité de l'arbre 14, le doigt qui y est fixé peut effectuer une rotation de 360° autour de l'arbre. Le deuxième élément de transmission de mouvement rotatif 18, quant à lui, ne peut pas effectuer une rotation complète de 360°. Pour cette raison, le positionnement du plateau 12 est limité dans sa gamme de positions possibles, mais peut tout à fait convenir pour déplacer le plateau entre certaines positions prédéfinies. La bielle 21 peut être reliée à un autre organe que le plateau 12, par exemple un capot ou un système de verrouillage.

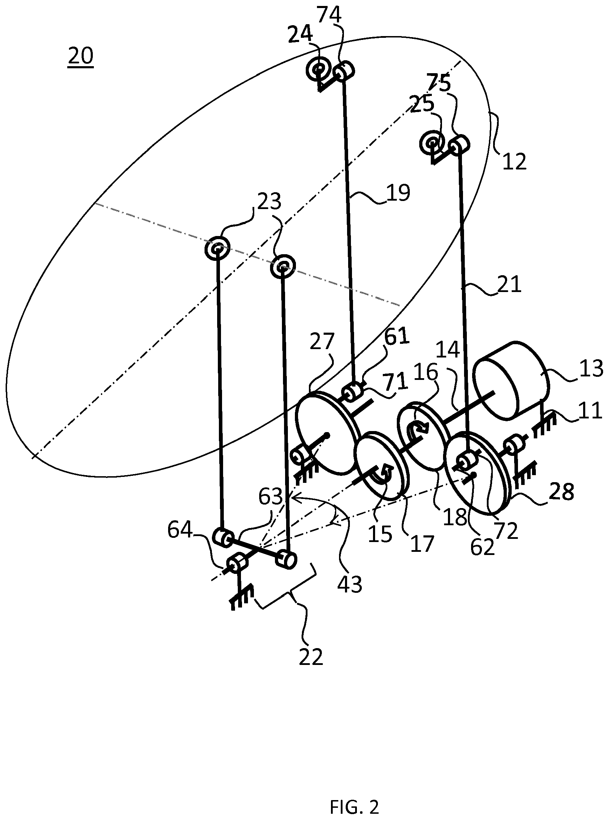

La figure 2 représente un autre mode de réalisation d'un dispositif de positionnement 20 selon l'invention. Le dispositif de positionnement 20 présenté à la figure 2 est presque identique au dispositif de positionnement 10 présenté à la figure 1. Le dispositif de positionnement 20 comprend en outre un troisième élément de transmission de mouvement rotatif 27 relié au premier élément de transmission de mouvement rotatif 17 de sorte que la rotation du premier élément de transmission de mouvement rotatif 17 dans le premier sens 15 entraîne le troisième élément de transmission de mouvement rotatif 27 en rotation sans entraîner en rotation le deuxième élément de transmission de mouvement rotatif 18, un quatrième élément de transmission de mouvement rotatif 28 relié au deuxième élément de transmission de mouvement rotatif 18 de sorte que la rotation du deuxième élément de transmission de mouvement rotatif 18 dans le second sens 16 entraîne le quatrième élément de transmission de mouvement rotatif 28 en rotation sans entraîner en rotation le premier élément de transmission de mouvement rotatif 17. La première bielle 19 relie le plateau 12 au premier élément de transmission de mouvement rotatif 17 par l'intermédiaire du troisième élément de transmission de mouvement rotatif 27, et la deuxième bielle 21 relie le plateau 12 au deuxième élément de transmission de mouvement rotatif 18 par l'intermédiaire du quatrième élément de transmission de mouvement rotatif 28.

Dans le mode de réalisation présenté à la figure 2, le dispositif de positionnement 20 comprend le premier doigt 61 fixé cette fois au troisième élément de transmission de mouvement rotatif 27 (et non plus au premier élément 17) s'étendant sensiblement parallèlement à l'arbre moteur 14. Le dispositif de positionnement comprend le deuxième doigt 62 fixé cette fois au quatrième élément de transmission de mouvement rotatif 28 (et non plus au deuxième élément 18) s'étendant sensiblement parallèlement à l'arbre moteur 14.

De façon analogue au dispositif de positionnement 10 présenté à la figure 1, la première bielle 19 s'étend sensiblement perpendiculairement au premier doigt 61 et est en liaison pivot avec le premier doigt 61. La deuxième bielle 21 s'étend sensiblement perpendiculairement au deuxième doigt 62 et est en liaison pivot avec le deuxième doigt 62.

Dans cette configuration, les deux doigts 61 et 62 reliés aux bielles 19, 21 peuvent effectuer une rotation complète de 360° autour de leur axe de rotation. Les bielles 19, 21 sont dégagées de l'axe moteur. Il en résulte qu'avec un seul moteur 13, il est possible d'orienter le plateau 12 selon deux axes de rotation définis par les deux axes 63, 64 de l'élément de liaison 22 définissant les deux degrés de liberté en rotation.

Selon une variante de l'invention, le troisième élément de transmission de mouvement rotatif 27 peut avoir un premier rapport de réduction avec le premier élément de transmission de mouvement rotatif 17 et le quatrième élément de transmission de mouvement rotatif 28 peut avoir un deuxième rapport de réduction avec le deuxième élément de transmission de mouvement rotatif 18.

Avantageusement, le premier rapport de réduction du troisième élément 27 par rapport au premier élément 17 est supérieur à 1 et le deuxième rapport de réduction du quatrième élément 28 par rapport au deuxième élément 18 est supérieur à 1. Cela permet une meilleure précision dans le positionnement du plateau 12.

Avantageusement, le premier rapport de réduction et le deuxième rapport de réduction sont identiques afin de permettre une loi de commande du positionnement du plateau moins complexe.

Dans le mode de réalisation présenté à la figure 2, le premier et le troisième éléments de transmission de mouvement rotatif 17, 27 sont des pignons, le troisième élément de transmission de mouvement rotatif 27 engrènant avec le premier élément de transmission de mouvement rotatif 17 de sorte à ce que la rotation du premier élément de transmission de mouvement rotatif 17 dans le premier sens 15 entraîne le troisième élément de transmission de mouvement rotatif 27 en rotation. Dans le mode de réalisation présenté sur la figure 2, l'élément de transmission de mouvement rotatif 27 est alors entraîné en rotation dans le second sens 16. Mais l'invention inclut aussi tout mode de réalisation incluant un ou des pignons intermédiaires entre l'élément 17 et l'élément 27, auquel cas l'élément de transmission de mouvement rotatif 27 pourrait soit être entraîné dans le premier sens 15 ou dans le second sens 16.

Le deuxième et le quatrième éléments de transmission de mouvement rotatif 18, 28 sont des pignons, le quatrième élément de transmission de mouvement rotatif 28 engrènant avec le deuxième élément de transmission de mouvement rotatif 18 de sorte que la rotation du deuxième élément de transmission de mouvement rotatif 18 dans le second sens (16) entraîne le quatrième élément de transmission de mouvement rotatif (28) en rotation. Dans le mode de réalisation présenté sur la figure 2, l'élément de transmission de mouvement rotatif 28 est alors entraîné en rotation dans le premier sens 15. Mais l'invention inclut aussi tout mode de réalisation incluant un ou des pignons intermédiaires entre l'élément 18 et l'élément 28, auquel cas l'élément de transmission de mouvement rotatif 28 pourrait soit être entraîné dans le premier sens 15 ou dans le second sens 16.

Sur la figure 2, les pignons 17, 27 et 18, 28 sont représentés de manière standard avec des axes parallèles. L'invention s'applique également à des pignons à axes concourants. De même, tout type de denture peut être considéré : dentures droites, hélicoïdales, etc. de sorte que la rotation de l'élément 17, respectivement 18, transmette le mouvement de rotation à l'élément 27, respectivement 28.

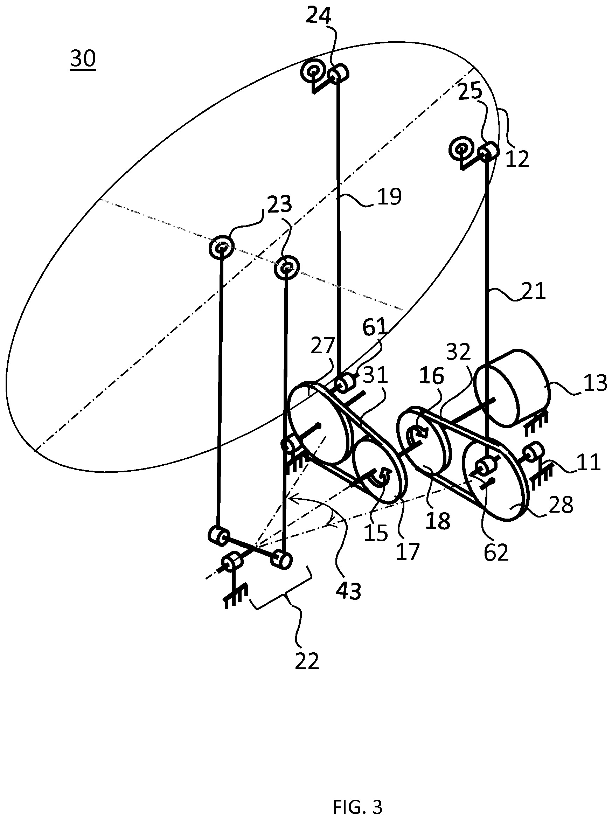

La figure 3 représente un autre mode de réalisation d'un dispositif de positionnement 30 selon l'invention. Le dispositif de positionnement 30 représenté sur la figure 3 est identique au dispositif de positionnement 20 représenté sur la figure 2. La seule différence concerne les éléments de transmission de mouvement rotatif 17, 18, 27, 28.

Dans le mode de réalisation du dispositif de positionnement 30, le premier et le troisième éléments de transmission de mouvement rotatif 17, 27 sont des poulies, le troisième élément de transmission de mouvement rotatif 27 étant relié au premier élément de transmission de mouvement rotatif 17 par une première courroie 31, de sorte que la rotation du premier élément de transmission de mouvement rotatif 17 dans le premier sens 15 entraîne le troisième élément de transmission de mouvement rotatif 27 en rotation dans le premier sens 15.

Et le deuxième et le quatrième éléments de transmission de mouvement rotatif 18, 28 sont des poulies, le quatrième élément de transmission de mouvement rotatif 28 étant relié au deuxième élément de transmission de mouvement rotatif 18 par une deuxième courroie 32, de sorte que la rotation du deuxième élément de transmission de mouvement rotatif 18 dans le second sens 16 entraîne le quatrième élément de transmission de mouvement rotatif 28 en rotation dans le second sens 16.

A noter que dans ce mode de réalisation, il peut s'agir de poulies reliées par des courroies lisses ou bien avantageusement, pour une meilleure transmission du mouvement, de roues dentées reliées avec des courroies dentées.

Comme mentionné précédemment pour le dispositif de positionnement 20, dans le mode de réalisation du dispositif de positionnement 30, le troisième élément de transmission de mouvement rotatif 27 peut avoir un premier rapport de réduction avec le premier élément de transmission de mouvement rotatif 17 et le quatrième élément de transmission de mouvement rotatif 28 peut avoir un deuxième rapport de réduction avec le deuxième élément de transmission de mouvement rotatif 18.

Et avantageusement, le premier rapport de réduction du troisième élément 27 par rapport au premier élément 17 est supérieur à 1 et le deuxième rapport de réduction du quatrième élément 28 par rapport au deuxième élément 18 est supérieur à 1. Cela permet une meilleure précision dans le positionnement du plateau 12.

Là encore, le premier rapport de réduction et le deuxième rapport de réduction sont avantageusement identiques pour simplifier la loi de commande du positionnement du plateau 12.

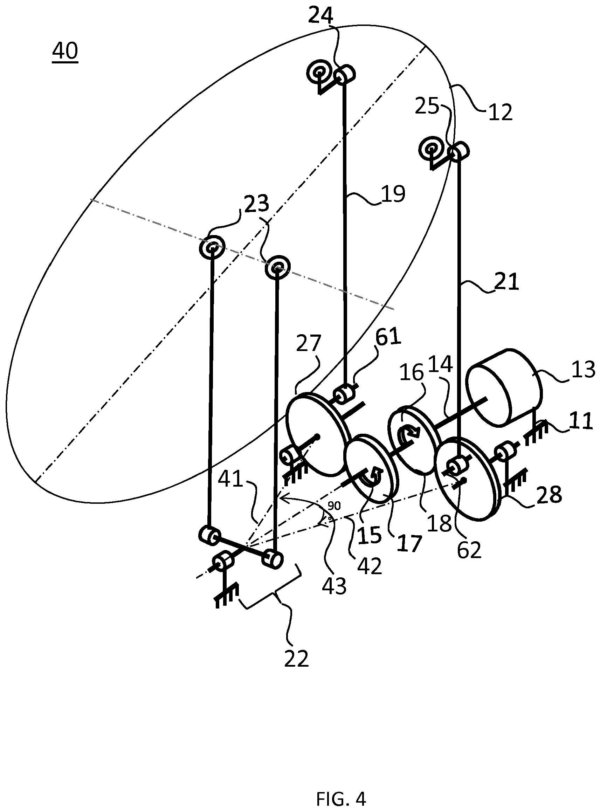

La figure 4 représente un autre mode de réalisation d'un dispositif de positionnement 40 selon l'invention. Ce dispositif de positionnement 40 est identique au dispositif de positionnement 20 présenté à la figure 2. Dans ce mode de réalisation, un premier axe 41 passant par le centre du troisième élément de transmission de mouvement rotatif 27 et le centre de l'élément de liaison 22 et un deuxième axe 42 passant par le centre du quatrième élément de transmission de mouvement rotatif 28 et le centre de l'élément de liaison s'intersectent sensiblement perpendiculairement. Autrement dit, l'angle 43 est égal à 90°. Cela permet de faciliter le calcul des lois de positionnement du plateau 12. En effet, dans ce cas, les transformations mathématiques à effectuer se font dans des repères orthonormés. Toutefois, il est possible que l'angle 43 ne soit pas égal à 90°, auquel cas les lois de positionnement prennent une forme plus complexe.

Avantageusement, le plateau 12 s'étend sensiblement selon un plan et un troisième axe sensiblement perpendiculaire aux premier et deuxième axes 41, 42 passant par l'élément de liaison 22 intersecte le plateau 12 sensiblement en son centre. En d'autres termes, l'élément de liaison 22 est situé sous le centre du plateau 12. Ce positionnement du cardan permet une mobilité optimale du plateau 12.

Un élément de liaison 22 déporté par rapport au centre du plateau 12 est également envisageable.

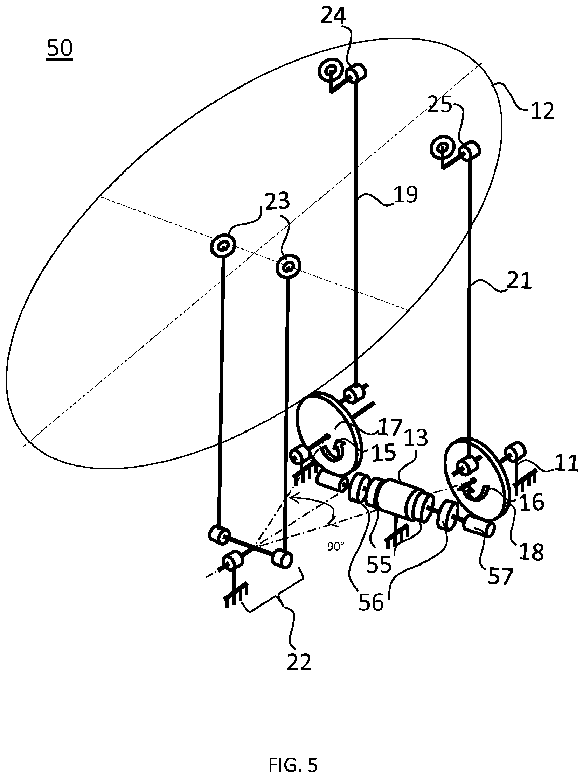

La figure 5 représente un autre mode de réalisation d'un dispositif de positionnement 50 selon l'invention. Ce dispositif de positionnement 50 se rapproche du dispositif de positionnement 20 présenté à la figure 2 dans sa conception. Dans ce mode de réalisation, les éléments de transmission de mouvement rotatif 17, 18 ne sont pas montés sur l'arbre moteur 14. L'arbre moteur 14 s'étend de part et d'autre du moteur et les deux côtés de l'arbre moteur sont utilisés, ce qui permet de le tourner de 90° par rapport au mode de réalisation présenté à la figure 2. Cette disposition permet de couvrir la distance entre les premier et deuxième éléments de transmission de mouvement rotatif 17, 18. Deux réducteurs 55 en sortie moteur sont nécessaires (un de chaque côté du moteur 13). De chaque côté du moteur 13 en sortie des réducteurs 55 se trouvent deux roues libres 56. La transmission entre l'arbre moteur 14 et les premier et deuxième éléments de transmission de mouvement rotatif 17, 18 se fait respectivement par les deux pignons ou vis sans fin 57. Cette configuration permet d'obtenir un rapport de réduction élevé. Par exemple, il est possible de réduire une première fois entre le moteur 13 et la roue libre 56 avec un rapport 7. Le pas moteur devient alors 5°, ce qui est plus cohérent pour la roue libre 56, et ensuite mettre un rapport de réduction de 60. Cela permet également de réduire les jeux de la roue libre vus au final sur l'instrument, par exemple un réflecteur. En effet, un jeu de 0,5° est alors divisé par 60, puis par 7 par l'ensemble de bielles. Finalement, le réflecteur ne voit que 0,001°.

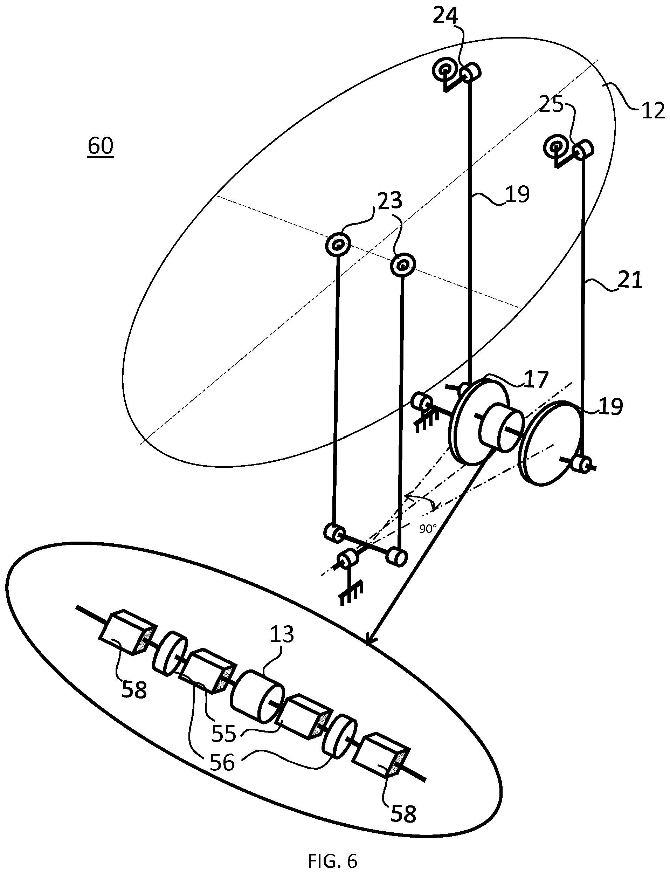

La figure 6 représente un autre mode de réalisation d'un dispositif de positionnement 60 selon l'invention. Ce dispositif de positionnement 60 se rapproche du dispositif de positionnement 50 présenté à la figure 5 dans sa conception. Dans ce mode de réalisation, les premier et deuxième éléments de transmission de mouvement rotatif 17, 18 sont orientés à 90° par rapport à ceux du dispositif de positionnement 50, de sorte à faire coïncider les axes du moteur 13, des roues libres et des éléments de transmission de mouvement rotatif 17, 18. Tous les organes sont donc alignés et les réducteurs peuvent être placés à des endroits judicieux. Notamment, le réducteur 55 avec un rapport de 7 peut être placé entre le moteur 13 et la roue libre 56 et le réducteur 58 avec un rapport de 60 peut être placé entre le roue libre 56 et l'élément de transmission de mouvement rotatif 17 (ou 18). Cette configuration présente l'avantage que les réducteurs utilisés sont disponibles sur le marché et peuvent être achetés auprès de fournisseurs. Cela signifie que le dimensionnement et la lubrification des réducteurs sont gérés par le fournisseur. Par ailleurs, il faut juste prévoir deux roulements pour les deux éléments de transmission de mouvement rotatif 17, 18.

Sur les figures 1 à 6, les bielles 19 et 21 ainsi que les éléments de liaison entre le plateau 12 et l'élément de liaison 22 sont représentés de manière allongée pour une facilité de lecture des figures. En pratique, ces éléments sont bien plus courts, pour abaisser le centre de gravité de l'ensemble et offrir une meilleure stabilité, et aussi pour des raisons de masse et d'encombrement.

L'invention permet ainsi de diviser par deux le nombre de moteurs, de cartes de commande moteur et de torons de câbles par rapport aux dispositifs connus de l'état de l'art, ce qui représente un gain en coûts, en masse et en contrainte de déploiement.

Dans le cas d'une application de l'invention avec un instrument de type réflecteur sur le plateau, la télémétrie de position du réflecteur peut être assurée par une télémétrie intégrée au moteur avec comptage du nombre de pas effectués dans le premier sens et dans le second sens par logiciel (on parle alors de télémétrie relative). Ou bien il peut s'agir d'une télémétrie hors moteur placée par exemple au niveau des liaisons pivot des bielles avec enregistrement des pas commandés (on parle alors de télémétrie absolue).

De plus, le rapport de réduction entre les éléments de transmission de mouvement rotatif (pignons ou poulies et courroies) peut permettre d'utiliser un moteur pas à pas moins précis et sans réducteur, et donc moins cher qu'un moteur utilisé dans les dispositifs de l'état de l'art. Par ailleurs, dans les modes de réalisation comprenant les troisième et quatrième éléments de transmission de mouvement rotatif, les efforts mécaniques passent par les axes des troisième et quatrième éléments de transmission de mouvement rotatif et pas par le moteur. Il est donc possible d'utiliser un moteur moins robuste, et donc moins cher.

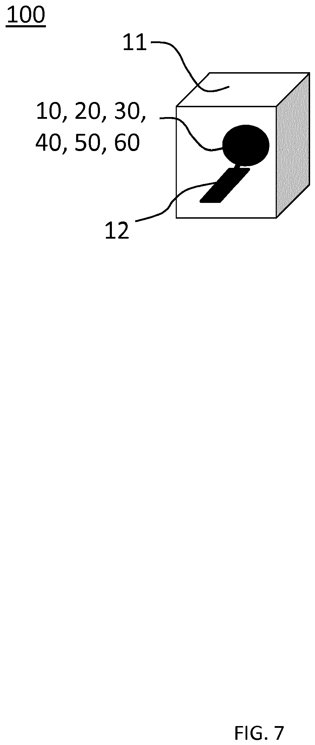

La figure 7 représente schématiquement un équipement spatial 100 comprenant un dispositif de positionnement 10, 20, 30, 40, 50, 60 selon l'invention. L'équipement spatial 100 peut être un satellite dont la plateforme tient lieu de châssis pour le dispositif de positionnement 10, 20, 30, 40. Le plateau 12 peut porter n'importe quel instrument nécessitant d'être orienté dans une position prédéfinie.

## Revendications

1. Dispositif de positionnement (10, 20, 30, 40, 50, 60) comprenant :
- un châssis (11),
- un plateau (12) à positionner,
**caractérisé en ce qu'**il comprend en outre :
- un moteur (13) comprenant un stator relié au châssis (11) et un rotor,
- un arbre (14) relié au rotor entraîné par le moteur (13), mobile en rotation par rapport au châssis (11) dans un premier sens (15) et dans un second sens (16), inverse du premier sens (15),
- un premier élément de transmission de mouvement rotatif (17) configuré pour être entraîné en rotation par l'arbre (14) dans le premier sens (15) et libre dans le second sens (16),
- un deuxième élément de transmission de mouvement rotatif (18) configuré pour être entraîné en rotation par l'arbre (14) dans le second sens (16) et libre dans le premier sens (15),
- une première bielle (19) reliée au plateau (12) par une première liaison pivot (74) et reliée au premier élément de transmission de mouvement rotatif (17) par une deuxième liaison pivot (71) décalée de l'axe de rotation du premier élément de transmission de mouvement rotatif (17),
- une deuxième bielle (21) reliée au plateau (12) par une troisième liaison pivot (75) et reliée au deuxième élément de transmission de mouvement rotatif (18) par une quatrième liaison pivot (72) décalée de l'axe de rotation du deuxième élément de transmission de mouvement rotatif (18),
- un élément de liaison (22) à au moins deux degrés de liberté en rotation entre le plateau (12) et le châssis (11).

2. Dispositif de positionnement (10, 20, 30, 40, 50, 60) selon la revendication 1, **caractérisé en ce que** le premier élément de transmission de mouvement rotatif (17) comprend une première roue libre, et **en ce que** le deuxième élément de transmission de mouvement rotatif (18) comprend une deuxième roue libre.

3. Dispositif de positionnement (20, 30, 40) selon l'une des revendications 1 ou 2, **caractérisé en ce qu'**il comprend :
- un troisième élément de transmission de mouvement rotatif (27) relié au premier élément de transmission de mouvement rotatif (17) de sorte que la rotation du premier élément de transmission de mouvement rotatif (17) dans le premier sens (15) entraîne le troisième élément de transmission de mouvement rotatif (27) en rotation,
- un quatrième élément de transmission de mouvement rotatif (28) relié au deuxième élément de transmission de mouvement rotatif (18) de sorte que la rotation du deuxième élément de transmission de mouvement rotatif (18) dans le second sens (16) entraîne le quatrième élément de transmission de mouvement rotatif (28) en rotation,
et **en ce que** la première bielle (19) relie le plateau (12) au premier élément de transmission de mouvement rotatif (17) par l'intermédiaire du troisième élément de transmission de mouvement rotatif (27), et la deuxième bielle (21) relie le plateau (12) au deuxième élément de transmission de mouvement rotatif (18) par l'intermédiaire du quatrième élément de transmission de mouvement rotatif (28).

4. Dispositif de positionnement (20, 30, 40) selon la revendication 3, **caractérisé en ce que** le troisième élément de transmission de mouvement rotatif (27) a un premier rapport de réduction avec le premier élément de transmission de mouvement rotatif (17) et **en ce que** le quatrième élément de transmission de mouvement rotatif (28) a un deuxième rapport de réduction avec le deuxième élément de transmission de mouvement rotatif (18).

5. Dispositif de positionnement (20, 30, 40) selon la revendication 4, **caractérisé en ce que** le premier rapport de réduction et le deuxième rapport de réduction sont identiques.

6. Dispositif de positionnement (10, 20, 30, 40) selon l'une quelconque des revendications précédentes, **caractérisé en ce que** l'élément de liaison (22) est une rotule à doigt.

7. Dispositif de positionnement (40) selon l'une quelconque des revendications 3 à 6, **caractérisé en ce qu'**un premier axe (41) passant par le centre du troisième élément de transmission de mouvement rotatif (27) et le centre de l'élément de liaison (22) et un deuxième axe (42) passant par le centre du quatrième élément de transmission de mouvement rotatif (28) et le centre de l'élément de liaison s'intersectent sensiblement perpendiculairement.

8. Dispositif de positionnement (20, 40) selon l'une quelconque des revendications 3 à 7, **caractérisé en ce que** le premier et le troisième éléments de transmission de mouvement rotatif (17, 27) sont des pignons, le troisième élément de transmission de mouvement rotatif (27) engrènant avec le premier élément de transmission de mouvement rotatif (17) de sorte à ce que la rotation du premier élément de transmission de mouvement rotatif (17) dans le premier sens (15) entraîne le troisième élément de transmission de mouvement rotatif (27) en rotation.

9. Dispositif de positionnement (20, 40) selon l'une quelconque des revendications 3 à 8, **caractérisé en ce que** le deuxième et le quatrième éléments de transmission de mouvement rotatif (18, 28) sont des pignons, le quatrième élément de transmission de mouvement rotatif (28) engrènant avec le deuxième élément de transmission de mouvement rotatif (18) de sorte que la rotation du deuxième élément de transmission de mouvement rotatif (18) dans le second sens (16) entraîne le quatrième élément de transmission de mouvement rotatif (28) en rotation.

10. Dispositif de positionnement (30) selon l'une quelconque des revendications 3 à 7, **caractérisé en ce que** le premier et le troisième éléments de transmission de mouvement rotatif (17, 27) sont des poulies, le troisième élément de transmission de mouvement rotatif (27) étant relié au premier élément de transmission de mouvement rotatif (17) par une première courroie (31), de sorte que la rotation du premier élément de transmission de mouvement rotatif (17) dans le premier sens (15) entraîne le troisième élément de transmission de mouvement rotatif (27) en rotation dans le premier sens (15).

11. Dispositif de positionnement (30) selon la revendication 10, **caractérisé en ce que** le deuxième et le quatrième éléments de transmission de mouvement rotatif (18, 28) sont des poulies, le quatrième élément de transmission de mouvement rotatif (28) étant relié au deuxième élément de transmission de mouvement rotatif (18) par une deuxième courroie (32), de sorte que la rotation du deuxième élément de transmission de mouvement rotatif (18) dans le second sens (16) entraîne le quatrième élément de transmission de mouvement rotatif (28) en rotation dans le second sens (16).

12. Dispositif de positionnement (20, 30, 40) selon l'une quelconque des revendications précédentes, **caractérisé en ce que** le plateau (12) s'étend sensiblement selon un plan et **en ce qu'**un troisième axe sensiblement perpendiculaire aux premier et deuxième axes (41, 42) passant par l'élément de liaison (22) intersecte le plateau (12) sensiblement en son centre.

13. Equipement spatial (100) comprenant un dispositif de positionnement (10, 20, 30, 40) selon l'une des revendications précédentes.

## Patentansprüche

1. Positionierungsvorrichtung (10, 20, 30, 40, 50, 60), die Folgendes umfasst:
- ein Chassis (11),
- eine zu positionierende Platte (12),
**dadurch gekennzeichnet, dass** sie ferner Folgendes umfasst:
- einen Motor (13), der einen mit dem Chassis (11) verbundenen Stator und einen Rotor umfasst,
- eine Welle (14), die mit dem vom Motor (13) angetriebenen Rotor verbunden ist und relativ zum Chassis (11) in einer ersten Richtung (15) und in einer der ersten Richtung (15) entgegengesetzten zweiten Richtung (16) drehbar ist,
- ein erstes Drehbewegungsübertragungselement (17), das so konfiguriert ist, dass es von der Welle (14) in der ersten Richtung (15) gedreht wird und in der zweiten Richtung (16) frei ist,
- ein zweites Drehbewegungsübertragungselement (18), das so konfiguriert ist, dass es von der Welle (14) in der zweiten Richtung (16) gedreht wird und in der ersten Richtung (15) frei ist,
- eine erste Pleuelstange (19), die mit der Platte (12) durch eine erste Schwenkverbindung (74) verbunden ist und mit dem ersten Drehbewegungsübertragungselement (17) durch eine zweite Schwenkverbindung (71) verbunden ist, die von der Drehachse des ersten Drehbewegungsübertragungselements (17) versetzt ist,
- eine zweite Pleuelstange (21), die mit der Platte (12) durch eine dritte Schwenkverbindung (75) verbunden ist und mit dem zweiten Drehbewegungsübertragungselement (18) durch eine vierte Schwenkverbindung (72) verbunden ist, die von der Drehachse des zweiten Drehbewegungsübertragungselements (18) versetzt ist,
- ein Verbindungselement (22) mit mindestens zwei Rotationsfreiheitsgraden zwischen der Platte (12) und dem Chassis (11).

2. Positionierungsvorrichtung (10, 20, 30, 40, 50, 60) nach Anspruch 1, **dadurch gekennzeichnet, dass** das erste Drehbewegungsübertragungselement (17) einen ersten Freilauf umfasst und dass das zweite Drehbewegungsübertragungselement (18) einen zweiten Freilauf umfasst.

3. Positionierungsvorrichtung (20, 30, 40) nach einem von Anspruch 1 oder 2, **dadurch gekennzeichnet, dass** sie Folgendes umfasst:
- ein drittes Drehbewegungsübertragungselement (27), das mit dem ersten Drehbewegungsübertragungselement (17) verbunden ist, so dass die Drehung des ersten Drehbewegungsübertragungselements (17) in der ersten Richtung (15) bewirkt, dass sich das dritte Drehbewegungsübertragungselement (27) dreht,
- ein viertes Drehbewegungsübertragungselement (28), das mit dem zweiten Drehbewegungsübertragungselement (18) verbunden ist, so dass die Drehung des zweiten Drehbewegungsübertragungselements (18) in der zweiten Richtung (16) bewirkt, dass sich das vierte Drehbewegungsübertragungselement (28) dreht,
und dadurch, dass die erste Pleuelstange (19) die Platte (12) über das dritte Drehbewegungsübertragungselement (27) mit dem ersten Drehbewegungsübertragungselement (17) verbindet und die zweite Pleuelstange (21) die Platte (12) über das vierte Drehbewegungsübertragungselement (28) mit dem zweiten Drehbewegungsübertragungselement (18) verbindet.

4. Positionierungsvorrichtung (20, 30, 40) nach Anspruch 3, **dadurch gekennzeichnet, dass** das dritte Drehbewegungsübertragungselement (27) ein erstes Untersetzungsverhältnis mit dem ersten Drehbewegungsübertragungselement (17) hat und dass das vierte Drehbewegungsübertragungselement (28) ein zweites Untersetzungsverhältnis mit dem zweiten Drehbewegungsübertragungselement (18) hat.

5. Positionierungsvorrichtung (20, 30, 40) nach Anspruch 4, **dadurch gekennzeichnet, dass** das erste Untersetzungsverhältnis und das zweite Untersetzungsverhältnis identisch sind.

6. Positionierungsvorrichtung (10, 20, 30, 40) nach einem der vorherigen Ansprüche, **dadurch gekennzeichnet, dass** das Verbindungselement (22) ein Kreuzgelenk ist.

7. Positionierungsvorrichtung (40) nach einem der Ansprüche 3 bis 6, **dadurch gekennzeichnet, dass** eine erste Achse (41), die durch den Mittelpunkt des dritten Drehbewegungsübertragungselements (27) und den Mittelpunkt des Verbindungselements (22) verläuft, und eine zweite Achse (42), die durch den Mittelpunkt des vierten Drehbewegungsübertragungselements (28) und den Mittelpunkt des Verbindungselements verläuft, sich im Wesentlichen lotrecht schneiden.

8. Positionierungsvorrichtung (20, 40) nach einem der Ansprüche 3 bis 7, **dadurch gekennzeichnet, dass** das erste und das dritte Drehbewegungsübertragungselement (17, 27) Ritzel sind, wobei das dritte Drehbewegungsübertragungselement (27) mit dem ersten Drehbewegungsübertragungselement (17) verzähnt, so dass die Drehung des ersten Drehbewegungsübertragungselements (17) in der ersten Richtung (15) eine Drehung des dritten Drehbewegungsübertragungselements (27) bewirkt.

9. Positionierungsvorrichtung (20, 40) nach einem der Ansprüche 3 bis 8, **dadurch gekennzeichnet, dass** das zweite und vierte Drehbewegungsübertragungselement (18, 28) Ritzel sind, wobei das vierte Drehbewegungsübertragungselement (28) mit dem zweiten Drehbewegungsübertragungselement (18) verzähnt, so dass die Drehung des zweiten Drehbewegungsübertragungselements (18) in der zweiten Richtung (16) eine Drehung des vierten Drehbewegungsübertragungselements (28) bewirkt.

10. Positionierungsvorrichtung (30) nach einem der Ansprüche 3 bis 7, **dadurch gekennzeichnet, dass** das erste und das dritte Drehbewegungsübertragungselement (17, 27) Riemenscheiben sind, wobei das dritte Drehbewegungsübertragungselement (27) mit dem ersten Drehbewegungsübertragungselement (17) durch einen ersten Riemen (31) verbunden ist, so dass die Drehung des ersten Drehbewegungsübertragungselements (17) in der ersten Richtung (15) bewirkt, dass sich das dritte Drehbewegungsübertragungselement (27) in der ersten Richtung (15) dreht.

11. Positionierungsvorrichtung (30) nach Anspruch 10, **dadurch gekennzeichnet, dass** das zweite und vierte Drehbewegungsübertragungselement (18, 28) Riemenscheiben sind, wobei das vierte Drehbewegungsübertragungselement (28) mit dem zweiten Drehbewegungsübertragungselement (18) durch einen zweiten Riemen (32) verbunden ist, so dass die Drehung des zweiten Drehbewegungsübertragungselements (18) in der zweiten Richtung (16) bewirkt, dass sich das vierte Drehbewegungsübertragungselement (28) in der zweiten Richtung (16) dreht.

12. Positionierungsvorrichtung (20, 30, 40) nach einem der vorherigen Ansprüche, **dadurch gekennzeichnet, dass** sich die Platte (12) im Wesentlichen in einer Ebene erstreckt und dass eine dritte Achse, die im Wesentlichen lotrecht zur ersten und zweiten Achse (41, 42) durch das Verbindungselement (22) verläuft, die Platte (12) im Wesentlichen in ihrem Mittelpunkt schneidet.

13. Raumfahrtausrüstung (100), die eine Positionierungsvorrichtung (10, 20, 30, 40) nach einem der vorherigen Ansprüche umfasst.

## Claims

1. Positioning device (10, 20, 30 40, 50, 60) comprising:
- a chassis (11),
- a plate (12) to be positioned,
**characterized in that** it further comprises:
- a motor (13) comprising a stator which is connected to the chassis (11) and a rotor,
- a shaft (14), which is connected to the rotor driven by the motor (13) and which is mobile in rotation relative to the chassis (11) in a first direction (15) and in a second direction (16) opposing the first direction (15),
- a first element for the transmission of rotational movement (17) which is configured to be driven in rotation by the shaft (14) in the first direction (15) and to be free in the second direction (16),
- a second element for the transmission of rotational movement (18) which is configured to be driven in rotation by the shaft (14) in the second direction (16) and to be free in the first direction (15),
- a first connecting rod (19) which is connected to the plate (12) by a first pivot connection (74) and which is connected to the first element for the transmission of rotational movement (17) by a second pivot connection (71) which is offset from the axis of rotation of the first element for the transmission of rotational movement (17),
- a second connecting rod (21) which is connected to the plate (12) by a third pivot connection (75) and which is connected to the second element for the transmission of rotational movement (18) by a fourth pivot connection (72) which is offset from the axis of rotation of the second element for the transmission of rotational movement (18),
- a connecting element (22) having at least two degrees of rotational freedom between the plate (12) and the chassis (11).

2. Positioning device (10, 20, 30, 40, 50, 60) according to Claim 1, **characterized in that** the first element for the transmission of rotational movement (17) comprises a first freewheel and **in that** the second element for the transmission of rotational movement (18) comprises a second freewheel.

3. Positioning device (20, 30, 40) according to one of Claims 1 or 2, **characterized in that** it comprises:
- a third element for the transmission of rotational movement (27) which is connected to the first element for the transmission of rotational movement (17) such that the rotation of the first element for the transmission of rotational movement (17) in the first direction (15) drives the third element for the transmission of rotational movement (27) in rotation,
- a fourth element for the transmission of rotational movement (28) which is connected to the second element for the transmission of rotational movement (18) such that the rotation of the second element for the transmission of rotational movement (18) in the second direction (16) drives the fourth element for the transmission of rotational movement (28) in rotation,
and **in that** the first connecting rod (19) connects the plate (12) to the first element for the transmission of rotational movement (17) by means of the third element for the transmission of rotational movement (27) and the second connecting rod (21) connects the plate (12) to the second element for the transmission of rotational movement (18) by means of the fourth element for the transmission of rotational movement (28).

4. Positioning device (20, 30, 40) according to Claim 3, **characterized in that** the third element for the transmission of rotational movement (27) has a first reduction ratio relative to the first element for the transmission of rotational movement (17) and **in that** the fourth element for the transmission of rotational movement (28) has a second reduction ratio relative to the second element for the transmission of rotational movement (18).

5. Positioning device (20, 30, 40) according to Claim 4, **characterized in that** the first reduction ratio and the second reduction ratio are identical.

6. Positioning device (10, 20, 30, 40) according to any one of the preceding claims, **characterized in that** the connecting element (22) is a finger ball joint.

7. Positioning device (40) according to any one of Claims 3 to 6, **characterized in that** a first axis (41) passing through the centre of the third element for the transmission of rotational movement (27) and the centre of the connecting element (22) and a second axis (42) passing through the centre of the fourth element for the transmission of rotational movement (28) and the centre of the connecting element intersect in a substantially perpendicular manner.

8. Positioning device (20, 40) according to any one of Claims 3 to 7, **characterized in that** the first and the third elements for the transmission of rotational movement (17, 27) are pinions, the third element for the transmission of rotational movement (27) meshing with the first element for the transmission of rotational movement (17) such that the rotation of the first element for the transmission of rotational movement (17) in the first direction (15) drives the third element for the transmission of rotational movement (27) in rotation.

9. Positioning device (20, 40) according to any one of Claims 3 to 8, **characterized in that** the second and the fourth elements for the transmission of rotational movement (18, 28) are pinions, the fourth element for the transmission of rotational movement (28) meshing with the second element for the transmission of rotational movement (18) such that the rotation of the second element for the transmission of rotational movement (18) in the second direction (16) drives the fourth element for the transmission of rotational movement (28) in rotation.

10. Positioning device (30) according to any one of Claims 3 to 7, **characterized in that** the first and the third elements for the transmission of rotational movement (17, 27) are pulleys, the third element for the transmission of rotational movement (27) being connected to the first element for the transmission of rotational movement (17) by a first belt (31) such that the rotation of the first element for the transmission of rotational movement (17) in the first direction (15) drives the third element for the transmission of rotational movement (27) in rotation in the first direction (15).

11. Positioning device (30) according to Claim 10, **characterized in that** the second and the fourth element for the transmission of rotational movement (18, 28) are pulleys, the fourth element for the transmission of rotational movement (28) being connected to the second element for the transmission of rotational movement (18) by a second belt (32) such that the rotation of the second element for the transmission of rotational movement (18) in the second direction (16) drives the fourth element for the transmission of rotational movement (28) in rotation in the second direction (16).

12. Positioning device (20, 30, 40) according to any one of the preceding claims, **characterized in that** the plate (12) extends substantially in one plane and **in that** a third axis substantially perpendicular to the first and second axes (41, 42) passing through the connecting element (22) intersects the plate (12) substantially at its centre.

13. Space equipment (100) comprising a positioning device (10, 20, 30, 40) according to one of the preceding claims.
